# FASCICULE DE BREVET EUROPEEN

(11) **EP 1 147 329 B1**
(45) Date de publication et mention de la délivrance du brevet: **02.10.2002**
(21) Numéro de dépôt: 00900623.0
(22) Date de dépôt: 20.01.2000
(51) Int. Cl.: F16H 33/08

(54) **TRANSMISSION MECANIQUE A VARIATION CONTINUE DU RAPPORT DE TRANSMISSION**
KONTINUIERLICH VERSTELLBARES, MECHANISCHES GETRIEBE
MECHANICAL TRANSMISSION WITH CONTINUOUSLY VARYING TRANSMISSION RATIO

(30) Priorité: 20.01.1999 FR 9900569
(43) Date de publication de la demande: 24.10.2001
(73) Titulaire: Guichard, Louis, F-21000 Dijon (FR)
(72) Inventeur: Guichard, Louis, F-21000 Dijon (FR)
(74) Mandataire: Puiroux, Guy
(86) Numéro de dépôt international: FR0000121
(87) Numéro de publication internationale: WO00043694

(56) Documents cités:
- EP-A- 0 399 888
- WO-A-97/29304
- DE-C- 343 984
- US-A- 1 767 311
- US-A- 4 179 943

## Description

La présente invention concerne un appareil automatique de transmission mécanique à variation continue du rapport de transmission depuis un rapport infini jusqu'au rapport 1/1 comportant un arbre menant et un arbre mené d'axes confondus, et un plateau menant comportant, à égale distance de l'arbre menant, des axes d'articulation sur lesquels sont articulées des masselottes. Un tel appareil entre dans la catégorie où toute différence de vitesse de rotation entre l'arbre mené et l'arbre menant provoque un débattement angulaire des masselottes autour desdits axes d'articulation, ces débattements angulaires entraînant un déplacement radial des centres de gravité desdites masselottes par rapport à l'arbre menant donc une variation de l'énergie cinétique desdites masselottes et, par suite, une augmentation du couple transmis à l'arbre mené.

On connaît déjà, ainsi qu'il est décrit dans le brevet européen EP 0 399 888, un appareil du type précité dans lequel le plateau mené qui est solidaire de l'arbre mené, porte une piste circulaire continue, excentrée par rapport à l'axe central commun aux axes menant et mené, et des galets roulent à l'intérieur de cette piste circulaire. Chacun de ces galets est porté par une biellette articulée autour d'un axe d'articulation porté par une masselotte, et produit, en roulant à l'intérieur de la piste excentrée, un débattement angulaire de la masselotte autour de son axe d'articulation sur le plateau menant.

Dans cet appareil, un diamètre AA' passant par l'axe commun aux arbres menants et menés et par l'axe de la piste circulaire excentrée détermine sur cette piste deux demi-circonférences. Dans une demi-circonférence AA', le centre de gravité de chaque masselotte se déplace en se rapprochant de l'axe central commun aux arbres menant et mené et subit de ce fait une décélération, ce qui provoque une diminution de l'énergie cinétique de la masselotte tandis que dans l'autre demi-circonférence A'A, le centre de gravité de chaque masselotte se déplace en s'éloignant de l'axe commun et subit une accélération en entraînant une augmentation de l'énergie cinétique de la masselotte. Les accélérations et décélérations s'accompagnent de débattements angulaires de la masselotte et par conséquent de modifications de la position angulaire de la masselotte par rapport au rayon joignant son axe d'articulation à l'axe central commun aux arbres menant et mené. Compte tenu de ces positions angulaires, l'inertie de chaque masselotte produit une force résultante dirigée vers l'intérieur de l'appareil pendant l'accélération, alors que pendant la décélération, la force résultante produite par l'inertie de chaque masselotte est dirigée vers l'extérieur. Les effets de ces forces résultantes dirigées vers l'intérieur sur la trajectoire A'A et vers l'extérieur sur la trajectoire AA' s'additionnent pour exercer sur l'axe excentré de la piste un couple de rotation autour de l'axe central commun aux arbres menant et mené, couple qui est transmis à l'arbre mené. Les couples transmis augmentent en fonction des vitesses d'entrée mais, par contre, diminuent avec la différence de vitesse entre l'arbre menant et l'arbre mené. Cette diminution du couple transmis correspond à une diminution des fréquences d'accélération et de décélération des masselottes précédemment indiquées. On a donc bien un appareil automatique de transmission mécanique auto-adaptatif qui, à toute augmentation du couple résistant exercé sur l'arbre mené se traduisant par une diminution de la vitesse de rotation de l'arbre mené par rapport à l'arbre menant, fera correspondre une augmentation proportionnelle du couple transmis par l'arbre menant à l'arbre mené. Ces couples tendent vers une valeur nulle quand la vitesse de l'arbre mené est égale à la vitesse de l'arbre menant. Le rapport de transmission se rapprochant de 1/1, seule subsiste alors l'action des forces centrifuges qui sont encore capables d'exercer des couples positifs et ce, grâce à une position angulaire des masselottes plus favorable sur la demi-circonférence AA' que sur la demi-circonférence A'A faisant en sorte que les couples positifs exercés par les forces centrifuges sur la demi-circonférence AA' excèdent les couples négatifs engendrés par les forces centrifuges sur la demi-circonférence A'A. Ceci étant, toute modification des régimes et des couples moteur réagit instantanément sur les rapports de transmission et sur les couples récepteurs et adapte ainsi ces différents paramètres aux meilleures conditions de fonctionnement de l'appareil.

L'appareil décrit dans le brevet EP 0399 888 déjà cité présente cependant plusieurs inconvénients. D'une part, l'utilisation de galets roulant à l'intérieur d'une piste circulaire ou entre deux pistes circulaires soumet ces galets à de brusques changements de vitesse de rotation ou même à de brutales inversions du sens de rotation qui produisent, sur les points de contact des galets et des pistes, des frictions importantes génératrices d'usure, d'échauffement, donc de pertes, et de bruit. D'autre part, pour réaliser un débattement angulaire des masselottes et des couples suffisamment importants, ces galets et ces pistes qui occupent un grand volume doivent être nécessairement disposés latéralement par rapport au plan des masselottes et, par conséquent, en porte-à-faux ce qui est source de fatigue et d'usure des articulations diverses.

Un autre inconvénient très important de ces appareils réside dans le fait que les accélérations indiquées précédemment dans la demi-circonférence A'A ne se produisent en réalité que depuis la position A' jusqu'à une position A", située bien avant la position A, et il en résulte que les décélérations, en commençant à partir de A", produisent des contre-couples et des à-coups très préjudiciables entre les positions A" et A.

L'un des buts de la présente invention est précisément de remédier à de tels inconvénients. A cet effet, cet appareil automatique de transmission mécanique à variation continue du rapport de transmission depuis un rapport infini jusqu'au rapport 1/1, comportant un arbre menant et un arbre mené d'axes confondus, un plateau menant solidaire de l'arbre menant et portant, uniformément répartis angulairement sur un cercle centré sur l'arbre menant, des premiers pivots sur lesquels sont articulées des masselottes, de telle façon que toute différence de vitesse de rotation entre l'arbre mené et l'arbre menant provoque un débattement angulaire des masselottes autour de leurs pivots, entraînant un déplacement radial de leurs centres de gravité par rapport à l'arbre menant, donc une variation de l'énergie cinétique des masselottes et par suite une augmentation du couple transmis à l'arbre mené, des bielles de commande de même longueur, fixées respectivement d'une part, à l'une de leurs extrémités, sur des seconds pivots solidaires des débattements angulaires des masselottes, et d'autre part, à leur autre extrémité, sur des troisièmes pivots articulés autour du maneton d'un vilebrequin central constituant l'arbre mené, afin d'obtenir le débattement angulaire des masselottes, est caractérisé en ce que chaque masselotte, de forme allongée et courbe, présentant une surface extérieure convexe et une surface intérieure concave, est reliée, par sa partie avant, au premier pivot porté par le plateau menant par le moyen d'un dispositif à double articulation destiné à permettre un débattement circonférentiel limité de la masselotte par rapport au premier pivot. De préférence, les troisièmes pivots sont portés par un moyeu mené, monté à rotation autour du maneton du vilebrequin central constituant l'arbre mené, les troisièmes pivots étant régulièrement répartis à égale distance de l'axe du maneton en étant parallèles entre eux et parallèles à cet axe.

Le fait que les bielles de commande sont articulées sur des pivots portés par un moyeu entourant le maneton, et non pas directement articulées sur le maneton lui-même, constitue bien un mode de réalisation particulier de l'invention.

Selon une autre caractéristique de l'invention, le dispositif à double articulation, reliant la partie avant de chaque masselotte à un premier pivot, est situé près de la surface intérieure de la masselotte et l'articulation de chaque bielle de commande sur la masselotte est située sur la partie arrière à proximité de la surface extérieure de la masselotte.

Suivant une autre caractéristique de l'invention, un deuxième plateau, parallèle au plateau menant, centré sur l'arbre central du vilebrequin, est destiné à maintenir les autres extrémités des premiers pivots, et il constitue ainsi, avec le premier plateau menant et les premiers pivots, un ensemble très rigide et résistant destiné à subir les forces centrifuges appliquées aux masselottes, qui peuvent prendre des valeurs importantes aux régimes de rotation élevés.

L'appareil suivant l'invention présente un certain nombre d'avantages. En premier lieu, il permet d'obtenir une large plage de variation continue procurant une adaptation automatique des rapports de vitesse et de couples aux meilleures conditions de fonctionnement. Le rapport de transmission varie depuis la vitesse nulle de sortie (ou rapport infini) jusqu'au rapport 1/1, évitant tout recours à un quelconque dispositif d'embrayage ou de couplage. Par ailleurs, pour chaque régime d'entrée, les couples produits sont beaucoup plus importants au démarrage que sur le rapport 1/1, et ils décroissent régulièrement entre ces deux limites.

Il est bien entendu que ces couples croissent en fonction du carré des régimes moteurs, des masses utilisées, des rayons des trajectoires circulaires de ces masses, de l'excentricité des manetons par rapport à l'axe central, et des fréquences des débattements angulaires des masselottes sur leurs pivots. Ces couples peuvent alors atteindre, au démarrage et sur les grands rapports de réduction, des valeurs très supérieures au couple nominal du moteur. Il faut signaler encore que le moteur entraînant l'arbre menant peut continuer à fonctionner, même lorsque l'arbre mené est bloqué. Dans ce cas, le couple transmis est maximal, mais le travail est nul, et compte tenu des très faibles pertes mécaniques par friction dans les articulations, cette situation n'entraîne aucune fatigue ni échauffement anormal de l'appareil.

Par ailleurs, le dispositif à double articulation prévu à l'avant de chaque masselotte permet d'amortir d'éventuelles vibrations et à régulariser les couples transmis à l'arbre mené même à des régimes de rotation élevés.

De conception très simple, robuste, fiable, bien équilibré, même à des régimes d'entrée élevés silencieux et très facile à monter et à démonter, l'appareil suivant l'invention offre une grande facilité de fabrication, un très faible encombrement, un rendement mécanique élevé atteignant pratiquement 100% sur le rapport 1/1, pour un prix de revient particulièrement réduit. L'appareil peut être fixé directement en bout du vilebrequin des moteurs thermiques, en remplacement du volant d'inertie habituel, et il permet ainsi un gain de poids considérable par rapport au dispositif classique comportant un embrayage et une boîte de vitesse.

En dehors de son utilisation comme variateur automatique des rapports de transmission et des couples, cet appareil peut plus simplement, pour certaines applications, tenir lieu d'embrayage automatique (sans friction ni usure, ni échauffement) ou de coupleur automatique, ou de limiteur de couple.

On décrira ci-après à titre d'exemple non limitatif diverses formes d'exécution de la présente invention en référence au dessin annexé sur lequel :
- la figure 1 est une vue en coupe transversale de l'appareil faite suivant la ligne I-I de la figure 2,
- la figure 2 est une vue en coupe axiale de l'appareil.
- la figure 3 représente une variante d'un dispositif à double articulation aménagé sur une masselotte,
- la figure 4 est une vue schématique représentant seize positions successives, dans des fractions de temps égales, des différents pivots, pendant un tour de rotation.

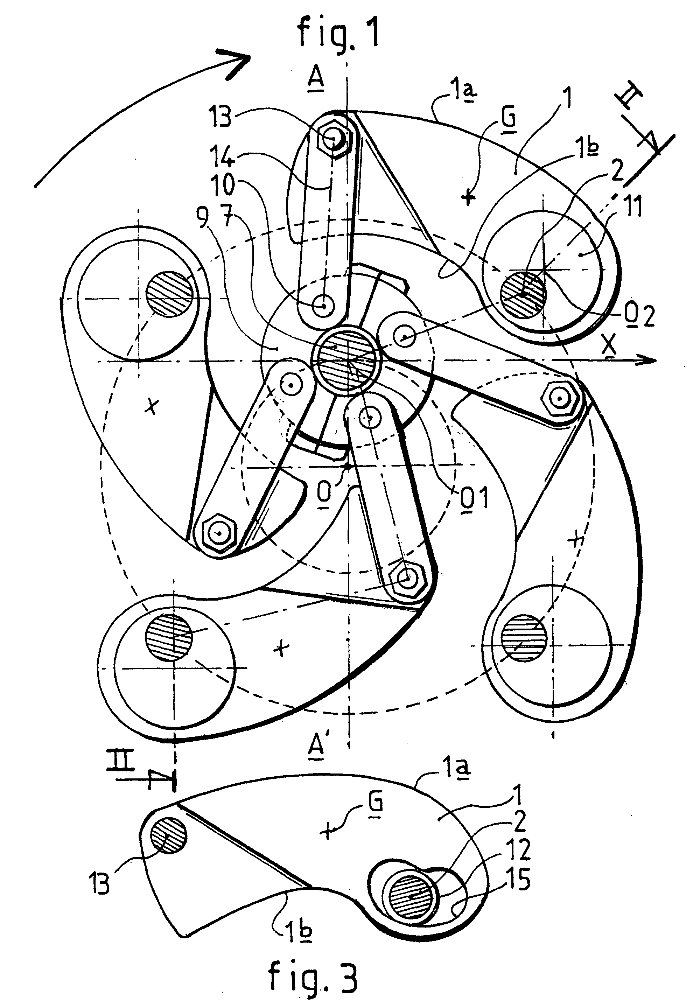

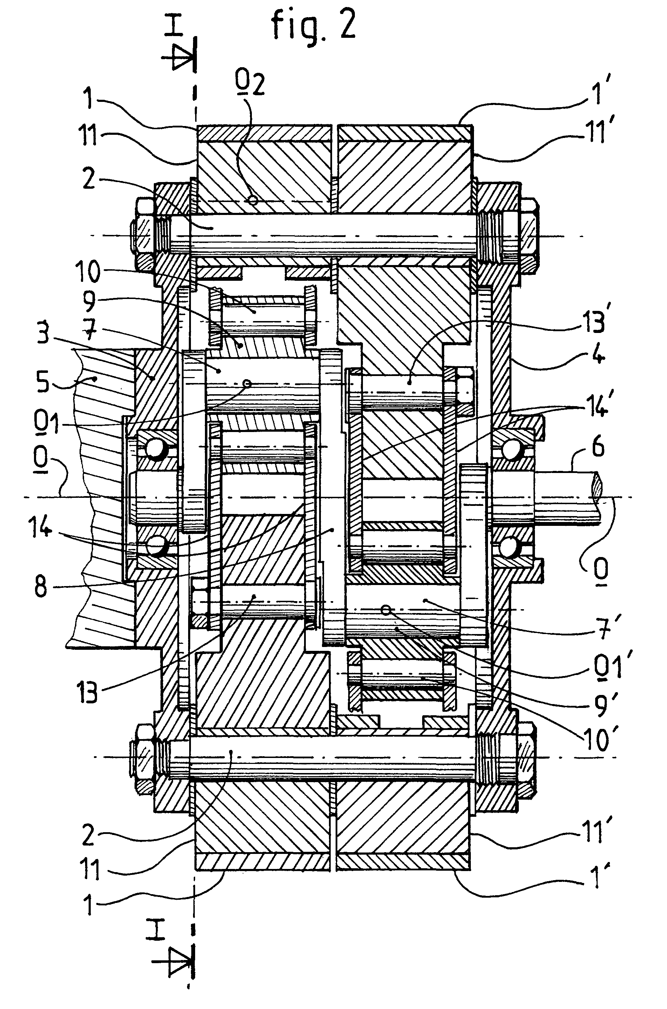

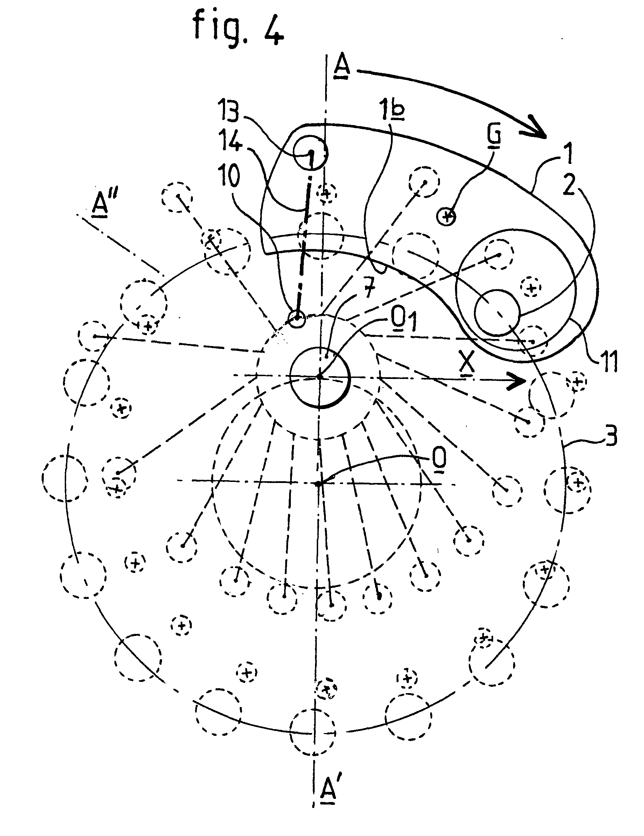

L'appareil représenté sur les figures 1 et 2 comporte plusieurs masselottes 1, généralement au nombre de quatre, de forme générale allongée et courbe, présentant une surface extérieure convexe 1a et une surface intérieure concave 1b, reliées chacune par un dispositif à double articulation à un premier pivot 2 disposé à l'avant et près de la surface intérieure 1b de la masselotte 1. Le premier pivot 2 est fixé perpendiculairement, par ses deux extrémités, entre un premier plateau menant 3 et un second plateau 4 parallèle et coaxial avec le premier plateau menant 3, lui-même entraîné en rotation par un arbre menant 5 d'axe central O. Les premiers pivots 2 sont uniformément répartis angulairement sur un cercle centré sur l'axe central O. A l'intérieur de cet ensemble rigide constitué par les plateaux 3 et 4 et les pivots 2 est disposé un vilebrequin 8 constituant l'arbre mené 6, d'axe central O, coaxial avec l'arbre menant 5. Autour d'un maneton 7, d'axe O₁, du vilebrequin 8 est monté à rotation un moyeu 9 traversé par des troisièmes pivots 10 régulièrement répartis sur une circonférence entourant l'axe O₁ du maneton 7, parallèles entre eux et à l'axe O₁ du maneton 7. Le sens de rotation de l'appareil est le sens des aiguilles d'une montre, comme il est indiqué sur les figures 1 et 4. A chaque masselotte 1 est également associée une bielle de commande 14, qui est articulée, à chacune de ses extrémités, d'une part sur un second pivot 13 disposé à l'extrémité arrière et près de la surface extérieure 1a de la masselotte 1, et d'autre part sur un troisième pivot 10 monté sur le moyeu 9 entourant le maneton 7 du vilebrequin 8. Chaque bielle 14 est constituée de deux barrettes dont les parties extrêmes sont fixées respectivement de part et d'autre sur les extrémités des pivots 10 et 13.

Pour mieux faire comprendre le fonctionnement de l'appareil, on a partagé les figures 1 et 4 suivant un grand axe diamétral et vertical AA' passant par l'axe central O et par l'axe O₁ du maneton 7, et qui partage la trajectoire des masselottes 1 en deux zones A-A' à droite et A'-A à gauche de l'axe AA'. Les deux axes O et O₁ étant excentrés l'un par rapport à l'autre, on comprend bien que, lorsque l'arbre menant 5 et l'arbre mené 6 tournent à des vitesses différentes, les bielles de commande 14 produisent des débattements angulaires des masselottes 1 autour de leurs premiers pivots respectifs 2, débattements qui se traduisent par des accélérations de leurs centres de gravité G dans la zone A'-A, et des décélérations dans la zone A-A'. Dans la zone d'accélération A'-A, l'inertie de chaque masselotte 1 provoque une force résultante transmise à la bielle de commande 14 qui exerce en retour une poussée vers la droite, c'est-à-dire dans le sens positif, sur le troisième pivot 10 et donc sur le moyeu 9 et sur le maneton 7, le sens positif étant celui des aiguilles d'une montre, comme représenté sur les figures 1 et 4. Par contre, dans la zone de décélération A-A' les forces résultantes dues à l'énergie cinétique des masselottes 1 exercent une force de traction sur les bielles de commande 14 qui se transmet sur le moyeu 9 et sur le maneton 7 vers la droite, c'est-à-dire là encore, dans le sens positif. Ces deux actions positives successives produites par les accélérations et décélérations des masselottes sur le maneton 7 engendrent ainsi un couple de rotation positif du maneton 7 autour de l'arbre mené 6.

Plus l'arbre menant 5 tourne vite par rapport à l'arbre mené 6, plus on aura d'oscillations des masselottes dans un temps donné, et donc plus le couple transmis à l'arbre mené 6 sera grand. C'est ce phénomène qui procure le caractère auto-adaptatif de l'appareil selon l'invention. De plus, pour une différence de vitesse donnée entre l'arbre menant 5 et l'arbre mené 6, plus l'arbre menant 5 tourne vite, et plus les masselottes 1 tourneront vite autour de l'axe central O, et donc plus grande sera leur inertie. Leur inertie étant plus grande, elles pourront transmettre à l'arbre mené 6 un couple plus important. On retrouve là une caractéristique fondamentale de l'invention selon laquelle les couples transmissibles sont d'autant plus importants que la vitesse de l'arbre menant 5 est grande.

La figure schématique 4 représente seize positions successives, à des fractions de temps égales, des différents pivots, et permet au besoin de positionner les centres de gravité successifs des masselottes 1 pendant un tour de rotation du plateau menant 3 autour du maneton 7 dans le cas d'une simple articulation rigide entre la masselotte 1 et le pivot menant 2. Les mesures prises sur cette figure schématique 4 montrent que dans ce cas les plus grandes vitesses circonférentielles des seconds pivots 13 se produisent en réalité quand ils passent au voisinage d'une position A" située bien avant la position A, et que les décélérations, en commençant à partir de A", produisent des contre-couples et des à-coups très préjudiciables entre A" et A.

Pour remédier à cet inconvénient, le dispositif à double articulation faisant l'objet de l'invention comporte une came circulaire 11 de centre O₂ montée à rotation dans un alésage prévu dans la partie avant de la masselotte 1, celle came 11 étant elle-même montée à rotation autour du premier pivot menant 2 dont l'axe est excentré par rapport au centre de la came O₂ et proche de la surface intérieure 1b de la masselotte 1. Ce dispositif permet, grâce au basculement de la came 11 sous l'action des couples moteurs, un débattement circonférentiel limité de la masselotte 1 par rapport au premier pivot 2, de reporter les accélérations et les vitesses maximales de la zone A" vers la position A, et de débuter les décélérations après le passage de ladite position A. En effet, les cames rotatives 11 sont soumises simultanément à des couples de basculement sous l'action des inerties des masselottes résistant aux forces de traction des pivots moteurs, et à des couples de basculement antagonistes produits par les forces centrifuges s'exerçant sur le centre de gravité G de la masselotte. Ces deux forces antagonistes, à savoir les forces d'inertie et les forces centrifuges qui varient simultanément en fonction du carré des régimes de rotation, déterminent une orientation d'équilibre de la came 11 dans l'alésage de la masselotte 1, quels que soient les régimes de rotation, même très élevés.

Les mêmes résultats sont obtenus par une variante constructive d'un dispositif à double articulation, représenté par la figure 3, constitué par une bague 12 montée à rotation autour du premier pivot 2, et roulant au contact d'une surface courbe de forme concave 15, à concavité tournée vers la surface externe 1a, d'une lumière en forme de "haricot" aménagée près de la surface interne 1b et à l'avant de la masselotte 1.

Quand le rapport de transmission atteint 1/1, les accélérations et décélérations des masselottes 1 n'existent plus car les arbres menant 5 et mené 6 sont immobiles l'un par rapport à l'autre, bien que tournant ensemble à la vitesse d'entraînement, mais des couples positifs suffisamment importants sont encore produits par les seules forces centrifuges, du fait des positions angulaires des bielles de commande 14 qui exercent globalement des forces de traction sur le moyeu 9 et sur le maneton 7, beaucoup plus favorables dans le sens positif que dans le sens négatif. En effet, il faut bien comprendre, en observant les figures 1 et 4, que les forces de traction sur les bielles 14 produisent des effets positifs sur le maneton 7 quand, à un instant donné, ces bielles présentent un angle inférieur à 90ø avec la direction positive O₁-X tangente en O₁ à la trajectoire circulaire de l'axe O₁ du maneton 7 autour de l'axe central O. Par contre, les bielles 14 produisent des effets négatifs quand elles présentent un angle supérieur à 90ø avec la direction O₁-X précédemment définie. La figure 1 montre que, sur les quatre bielles 14 représentées, trois produisent des effets positifs, et une seulement des effets négatifs. La figure schématique 4 montre également que sur les seize positions successives représentées, dix bielles produisent des effets positifs, et six autres seulement des effets négatifs. Il en résulte que, globalement, les actions des forces centrifuges produisent toujours des couples positifs importants sur l'arbre mené 6, non seulement sur le rapport de transmission 1/1, mais aussi sur toute la plage de variation depuis le rapport infini jusqu'au rapport 1/1. Ces couples positifs produits par les forces centrifuges s'ajoutent aux couples positifs produits par les accélérations et décélérations des masselottes, précédemment expliqués, et contribuent à procurer un automatisme parfaitement auto-adaptatif de l'appareil.

Pour transmettre des puissances et des couples plus importants et pour assurer un parfait équilibrage dynamique de l'appareil, l'invention prévoit, suivant l'exécution représentée sur la figure 2, de disposer un second ensemble de masselottes 1' articulées sur les mêmes premiers pivots 2 que les masselottes 1 du premier ensemble, de bielles de commande 14', de pivots 10' et 13' coopérant avec un deuxième moyeu 9' monté à rotation autour d'un second maneton 7' diamétralement opposé au premier maneton 7 par rapport à l'axe central O du vilebrequin 8. Tous ces éléments du second ensemble sont exactement semblables aux éléments homologues du premier ensemble. L'appareil peut être enfermé soit dans un carter fixe et étanche, soit dans un carter rotatif et étanche, obtenu en prolongeant et en reliant par leurs bords extérieurs les deux plateaux menants 3 et 4

## Revendications

1. Appareil (1) automatique de transmission mécanique à variation continue du rapport de transmission depuis un rapport infini jusqu'au rapport 1/1, comportant un arbre menant (5) et un arbre mené (6) d'axes confondus, un plateau menant (3) solidaire de l'arbre menant (5) et portant, uniformément répartis angulairement sur un cercle centré sur l'arbre menant (5), des premiers pivots (2) sur lesquels sont articulées des masselottes (1), de telle façon que toute différence de vitesse de rotation entre l'arbre mené (6) et l'arbre menant (5) provoque un débattement angulaire des masselottes (1) autour de leurs pivots (2), entraînant un déplacement radial de leur centre de gravité par rapport à l'arbre menant, donc une variation de l'énergie cinétique des masselottes (1) et par suite une augmentation du couple transmis à l'arbre mené, des bielles de commande (14) de même longueur, fixées respectivement, d'une part, à l'une de leurs extrémités, sur des seconds pivots (13) solidaires des débattements angulaires des masselottes (1), et d'autre part, à leur autre extrémité, sur des troisièmes pivots (10) articulées autour du maneton (7) d'un vilebrequin central (8) constituant l'arbre mené (6), afin d'obtenir le débattement angulaire des masselottes (1), **caractérisé en ce que** chaque masselotte (1) de forme allongée et courbe, présentant une surface extérieure convexe (1a) et une surface intérieure concave (1b), est reliée, par sa partie avant, au premier pivot (2) porté par le plateau menant (3) par le moyen d'un dispositif à double articulation (2,11;12,15) destiné à permettre un débattement circonférentiel limité de la masselotte (1) par rapport au premier pivot (2).

2. Appareil automatique de transmission mécanique selon la revendication 1 **caractérisé en ce que** le dispositif à double articulation (2,11;12,15), reliant la partie avant de chaque masselotte (1) à un premier pivot (2), est situé près de la surface intérieure (1b) de la masselotte (1) et l'articulation (13) de chaque bielle de commande (14) sur la masselotte (1) est située sur la partie arrière, à proximité de la surface extérieure (1a) de la masselotte (2).

3. Appareil automatique de transmission mécanique selon l'une quelconque des revendications 1 et 2 **caractérisé en ce que** le dispositif à double articulation est constitué par une came circulaire (11) d'axe (0₂) montée à rotation dans un alésage prévu dans la partie avant de la masselotte (1), et cette came (11) est elle-même montée à rotation autour du premier pivot (2), dont l'axe est excentré et parallèle par rapport à l'axe (0₂) de la came (11), et proche de la surface intérieure (1b) de la masselotte (1).

4. Appareil automatique de transmission mécanique selon l'une quelconque des revendications 1 et 2 **caractérisé en ce que** le dispositif à double articulation est constitué par une bague (12) montée à rotation autour du premier pivot (2), et roulant au contact d'une surface courbe de forme concave (15) d'une lumière aménagée à l'avant de la masselotte (1), près de sa surface intérieure (1b).

5. Appareil automatique de transmission mécanique selon l'une quelconque des revendications 1 et 2 **caractérisé en ce que** les troisièmes pivots (10) sont portés par un moyeu mené (9) monté à rotation autour du maneton (7) du vilebrequin central (8) constituant l'arbre mené (6), les troisièmes pivots (10) étant régulièrement répartis à égale distance de l'axe (0₁) du maneton (7), parallèles entre eux et parallèles à cet axe (0₁).

6. Appareil automatique de transmission mécanique selon l'une quelconque des revendications précédentes **caractérisé en ce que** chaque bielle de commande (14) est constituée de deux barrettes semblables et parallèles dont les parties extrêmes sont fixées respectivement, de part et d'autre, sur les extrémités, d'une part, du troisième pivot (10) et d'autre part du second pivot (13) logé dans la partie arrière et près de la surface extérieure (1a) de la masselotte (1).

7. Appareil automatique de transmission mécanique selon l'une quelconque des revendications précédentes **caractérisé en ce qu'**il comporte un deuxième ensemble indépendant de masselottes (1'), de dispositifs à double articulation (2,11,12,15) et de bielles de commande (14'), exactement semblable au premier ensemble, coopérant avec un second moyeu rotatif (9') monté sur un second maneton (7') aménagé sur le vilebrequin (8) et diamétralement opposé au premier maneton (7) par rapport à l'axe central (O) de l'arbre mené (6).

8. Appareil automatique de transmission mécanique selon la revendication 7 **caractérisé en ce que** les masselottes (1,1'), de chaque ensemble, toutes semblables, sont articulées par paires sur un même premier pivot (2) parallèle à l'axe central (O) et fixé, à chacune de ses extrémités, entre deux plateaux parallèles et coaxiaux (3,4) solidaires en rotation de l'arbre menant (5) et centrés sur l'arbre central du vilebrequin (8).

## Patentansprüche

1. Automatisches Gerät zur mechanischen Kraftübertragung mit kontinuierlich veränderbarem Übersetzungsverhältnis von unendlich bis 1:1, das folgende Teile enthält:
- eine Antriebswelle (5) und eine Abtriebswelle (6) auf derselben Achse,
- eine mit der Antriebswelle (5) fest verbundene Antriebsplatte (3), die in gleichmäßigem Winkelabstand auf einem zur Antriebswelle (5) konzentrischen Kreis befestigte erste Drehzapfen (2) trägt, um die sich Fliehgewichte (1) dergestalt drehen können, dass jede Drehzahldifferenz zwischen der Abtriebswelle (6) und der Antriebswelle (5) eine Winkelauslenkung der Fliehgewichte (1) um deren Drahzapfen (2) bewirkt, so dass eine radiale Verlagerung ihres Schwerpunktes in Bezug zur Antriebswelle und damit eine Änderung der kinetischen Energie der Fliehgewichte (1) stattfindet und demzufolge eine Erhöhung des auf die Abtriebswelle übertragenen Drehmoments,
- Steuerhebel (14) gleicher Länge, die einerseits mit einem Ende an mit dem Auslenkungsende der Fliehgewichte (1) fest verbundenen zweiten Drehzapfen (13), und andererseits mit dem anderen Ende an dritten Drehzapfen (10) angelenkt sind, welche sich kreisförmig auf dem Kurbellager (7) der zentralen Kurbelwelle (8) befinden, die ihrerseits die Abtriebswelle (6) bildet, um durch sie die Winkelauslenkung der Fliehgewichte (1) zu bewirken,
**dadurch gekennzeichnet, dass** jedes Fliehgewicht (1) von länglicher, gebogener Form mit einer konvexen Außenseite (1a) und einer konkaven Innenseite (1b) mit seiner Vorderseite mit den auf der Antriebsplatte (3) befindlichen ersten Drehzapfen (2) mittels einer doppelt gelenkigen Vorrichtung (2, 11; 12, 15) verbunden ist, die dazu dient, den Fliehgewichten (1) eine eingeschränkte Beweglichkeit in Umfangsrichtung in Bezug zu den ersten Drehzapfen (2) zu ermöglichen.

2. Automatisches Gerät zur mechanischen Kraftübertragung gemäß Anspruch 1, **dadurch gekennzeichnet, dass** die doppelt gelenkige Vorrichtung (2, 11; 12, 15), die den vorderen Teil jedes Fliehgewichts (1) mit den ersten Drehzapfen (2) verbindet, sich in der Nähe der Innenseite (1b) des Fliehgewichts (1) befindet und dass sich das Gelenk (13) jedes Steuerhebels (14) auf dem betreffenden Fliehgewicht (1) am hinteren Teil in der Nähe der Außenseite (1a) des Fliehgewichtes (1) befindet.

3. Automatisches Gerät zur mechanischen Kraftübertragung gemäß einem der Ansprüche 1 und/oder 2, **dadurch gekennzeichnet, dass** die doppelt gelenkige Vorrichtung aus einer kreisförmigen Nocke (11) mit Achse (O₂) besteht, die drehbar in einer Bohrung im vorderen Teil des Fliehgewichts (1) gelagert ist und dass selbige Nocke (11) ihrerseits drehbar auf dem ersten Drehzapfen (2) gelagert ist, der seinerseits exzentrisch und parallel zu Achse (O₂) der Nocke (11) verläuft, und sich in der Nähe der Innenseite (1b) des Fliehgewichts (1) befindet.

4. Automatisches Gerät zur mechanischen Kraftübertragung gemäß einem der Ansprüche 1 und/oder 2, **dadurch gekennzeichnet, dass** die doppelt gelenkige Vorrichtung aus einem Ring 12 besteht, der drehbar auf dem ersten Drehzapfen (2) gelagert ist, und der auf einer konkav gewölbten Fläche (15) einer im vorderen Teil des Fliehgewichts (1) in der Nähe seiner Innenseite (1b) angebrachten Aussparung abrollt.

5. Automatisches Gerät zur mechanischen Kraftübertragung gemäß einem der Ansprüche 1 und/oder 2, **dadurch gekennzeichnet, dass** die dritten Drehzapfen (10) auf einer angetriebenen Nabe (9) angebracht sind, die ihrerseits drehbar auf dem Kurbellager (7) der zentralen Kurbelwelle (8), die die Abtriebswelle (8) bildet, gelagert sind, und wobei diese dritten Drehzapfen (10) gleichmäßig verteilt in gleichem Abstand zur Achse (O₁) des Kurbellagers (7) und untereinander parallel sowie parallel zu dieser Achse (O₁) angeordnet sind.

6. Automatisches Gerät zur mechanischen Kraftübertragung gemäß einem beliebigen der vorgenannten Ansprüche, **dadurch gekennzeichnet, dass** jeder der Steuerhebel (14) aus zwei ähnlichen, parallelen Stegen besteht, deren Enden einerseits jeweils an den beiden gegenüberliegenden Enden der dritten Drehzapfen (10) und andererseits jeweils an den beiden gegenüberliegenden Enden der im hinteren Teil in der Nähe der Außenseite (1a) der Fliehgewichte (1) gelegenen zweiten Drehzapfen (13) befestigt sind.

7. Automatisches Gerät zur mechanischen Kraftübertragung gemäß einem beliebigen der vorgenannten Ansprüche, **dadurch gekennzeichnet, dass** es eine zweite unabhängige Anordnung von Fliehgewichten (1'), von doppelt gelenkigen Vorrichtungen (2, 11; 12, 15) und von Steuerhebeln (14') besitzt, die genau ähnlich zur ersten Anordnung ist und die mit einer zweiten drehbaren Nabe (9') zusammenwirkt, welche ihrerseits auf einem dem ersten Kurbellager (7) zur zentralen Achse (O) der Abtriebswelle (6) genau diametral gegenüberliegenden zweiten Kurbellager (7') gelagert ist.

8. Automatisches Gerät zur mechanischen Kraftübertragung gemäß Anspruch 7, **dadurch gekennzeichnet, dass** die alle untereinander ähnlichen Fliehgewichte (1, 1') jeder der beiden Anordnungen paarweise auf denselben ersten Drehzapfen (2) gelagert sind, und wobei diese ersten Drehzapfen (2) parallel zur Achse (O) verlaufen und zwischen zwei parallelen und koaxialen Platten (3, 4) befestigt sind, die ihrerseits drehfest mit der Antriebswelle (5) bzw. drehbar mit der zentralen Welle der Kurbelwelle (8) verbunden sind.

## Claims

1. Automatic apparatus for mechanical transmission with continuous variation of the transmission ratio from an infinite ratio to a 1/1 ratio, comprising a drive shaft (5) and a driven shaft (6) with coincident axes, a drive plate (3) secured to the drive shaft (5) and carrying, uniformly angularly spaced about a circle centered on the drive shaft (5), first pivots (2) on which are articulated weights (1), such that any difference of speed of rotation between the drive shaft (6) and the driven shaft (5) gives rise to angular displacement of the weights (1) about their pivots (2), giving rise to a radial displacement of their center of gravity relative to the drive shaft, hence a variation of the kinetic energy of the weights (1) and correspondingly an increase of the couple transmitted to the driven shaft, control connecting rods (14) of the same length, fixed respectively, on the one hand, at one of their ends, on second pivots (13) that move with angular displacements of the weights (1), and on the other hand, at their other end, on third pivots (10) articulated about the crankpin (7) of a central crankshaft (8) constituting the driven shaft (6), so as to obtain angular displacement of the weights (1), **characterized in that** each weight (1) of elongated and curved shape, having a convex external surface (1a) and a concave internal surface (1b), is connected, by its front portion, to the first pivot (2) carried by the drive plate (3) by means of a double articulation device (2, 11; 12, 15) adapted to permit limited circumferential displacement of the weight (1) relative to the first pivot (2).

2. Automatic apparatus for mechanical transmission according to claim 1 **characterized in that** the double articulation device (2, 11; 12, 15), connecting the front portion of each weight (1) to a first pivot (2), is located adjacent the internal surface (1b) of the weight (1) and the articulation (13) of each control connecting rod (14) on the weight (1) is located on the rear portion, adjacent the external surface (1a) of the weight (1).

3. Automatic apparatus for mechanical transmission according to any one of claims 1 and 2 **characterized in that** the double articulation device is constituted by a circular cam (11) with an axis (O₂) mounted rotatably in a bore provided in the front portion of the weight (1), and this cam (11) is itself mounted for rotation about the first pivot (2), whose axis is eccentric and parallel to the axis (O₂) of the cam (11), and near the internal surface (1b) of the weight (1).

4. Automatic apparatus for mechanical transmission according to any one of claims 1 and 2 **characterized in that** the double articulation device is constituted by a ring (12) mounted rotatably about a first pivot (2), and rolling in contact with a curved surface of concave shape (15) of an opening provided in the front of the weight (1), near its internal surface (1b).

5. Automatic apparatus for mechanical transmission according to any one of claims 1 and 2 **characterized in that** the third pivots (10) are carried by a driven hub (9) mounted for rotation about the crankpin (7) of the central crank shaft (8) constituting the driven shaft (6), the third pivots (10) being regularly spaced at equal distances from the axis (O₁) of the crankpin (7), parallel to each other and parallel to this axis (O₁).

6. Automatic apparatus for mechanical transmission according to any one of the preceding claims **characterized in that** each control connecting rod (14) is constituted by two small identical parallel rods whose end portions are fixed respectively, on opposite sides of the ends, on the one hand, of the third pivot (10) and on the other hand of the second pivot (13) disposed in the rear portion and near the external surface (1a) of the weight (1).

7. Automatic apparatus for mechanical transmission according to any one of the preceding claims **characterized in that** it comprises a second independent assembly of weights (1'), of double articulation devices (2, 11, 12, 15) and of control connecting rods (14'), exactly similar to the first assembly, coacting with a second rotatable hub (9') mounted on a second crankpin (7') provided on the crankshaft (8) and diametrically opposed to the first crankpin (7) relative to the central axis (O) of the driven shaft (6).

8. Automatic apparatus for mechanical transmission according to claim 7 **characterized in that** the weights (1, 1') of each assembly, all similar, are articulated pairwise about a first pivot (2) parallel to the central axis (O) and fixed, at each of its ends, between two parallel and coaxial plates (3, 4) secured rotatably to the drive shaft (5) and centered on the central shaft of the crankshaft (8).
